(19) Europäisches Patentamt
European Patent Office
Office européen des brevets

(11) Publication number : **0 479 982 B1**

(12) # EUROPEAN PATENT SPECIFICATION

(45) Date of publication of patent specification : **13.09.95 Bulletin 95/37**

(51) Int. Cl.$^6$ : **G07F 7/10**

(21) Application number : **91907516.8**

(22) Date of filing : **10.04.91**

(86) International application number : **PCT/GB91/00566**

(87) International publication number : **WO 91/16691 31.10.91 Gazette 91/25**

(54) **VALUE TRANSFER SYSTEM.**

(30) Priority : **12.04.90 GB 9008362**

(43) Date of publication of application : **15.04.92 Bulletin 92/16**

(45) Publication of the grant of the patent : **13.09.95 Bulletin 95/37**

(84) Designated Contracting States : **AT BE CH DE DK ES FR GB GR IT LI LU NL SE**

(56) References cited :
**EP-A- 0 256 768**
**EP-A- 0 338 568**
**WO-A-83/03018**
**DE-A- 3 248 400**
**US-A- 4 823 264**
**US-A- 4 839 504**
**IBM TECHNICAL DISCLOSURE BULLETIN vol. 19, no. 5, 01 October 1976, NEW-YORK pages 1917 - 1919; C.F EARLEY,D.ROYSE,J.SIGV: "BILL PAYMENT TRANSFER SYSTEM" see pages 1917 - 1919**

(73) Proprietor : **JONHIG LIMITED**
**5th Floor**
**27 Leadenhall Street**
**London EC3A 1AA (GB)**

(72) Inventor : **JONES, Timothy Lloyd**
**81 Wilbury Crescent**
**Hove, East Sussex BN3 6FH (GB)**
Inventor : **HIGGINS, Graham Robert Leslie**
**Flat 3, Abbeydale House,**
**Bathampton Lane**
**Bathampton, Bath, Avon BA2 (GB)**

(74) Representative : **Boydell, John Christopher et al**
**Stevens, Hewlett & Perkins**
**1 Serjeants' Inn**
**Fleet Street**
**London EC4Y 1LL (GB)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a value transfer system for cashless transactions. Several kinds of cashless financial transaction services are available. These include credit cards and debit cards which customers may use with a wide range of retailers. Each transaction is accompanied by the provision of customer account details required for the actual transfer of funds between the specific customers and the specific retailers.

Another form of cashless card system is the prepayment card system, where a card is purchased prior to a series of transactions and a value record recorded on it is appropriately decremented on each transaction. A 'phone card is an example of a prepayment card.

Such prior systems are inflexible and are no general substitute for cash in low value high volume transactions. Various proposals have been put forward to allow the interchange of money values between "electronic purses". For example, United States Patent No 4839504 (Casio Computer Co Ltd) discloses a system where a user is able to load money value onto an integrated circuit (IC) card, otherwise known as a smart card, by communication with his bank. At the bank the same value is applied to a separate IC account set up for the user. Purchases are able to be made by transfer of money values from the IC card to retailer equipment off-line from the bank. Each transaction requires transmission to the retailer and retention by him of details which include the purchaser's identity. Ultimately, in claiming funds from the bank the retailer presents a list of transaction details and there is account reconciliation to allow the IC account of the appropriate purchaser to be adjusted.

Procedures which, as above, require ultimate account reconciliation for every transaction are attended by two disadvantages. The first is practical. The storing, transmitting and reconciling of purchaser details for every transaction places an impossible burden on equipment if all cash type transactions are contemplated. Processing all such transactions efficiently in an acceptable time is not possible, even with the most modern equipment. The second objection is social. The anonymity of cash would be lost and potential would exist for details of personal spending habits to be derived.

The second of the above objections has been addressed by Chaum in "Controlling your Information with a Card Computer" ("Concepts Applications Activities" published by TeleTrust March 1989). Chaum proposes a system of "blind signatures" of money value items effected by an authorising entity such as a bank. This is a way of preventing ready identification of purchasers. However, a problem remains in that double payment by a purchaser must be detectable and Chaum meets this difficulty by including, in the data transferred in an off-line transaction, encrypted information concerning the purchaser. This information is relayed to the bank when the retailer claims credit and is used at the bank to detect double use of the same "electronic cash". Also, each signed item is recorded at the bank to make possible ultimate reconciliation of claims against these items, albeit without customer identification. The problems of storage, transmission and processing of individual transaction information remain. Additionally, Chaum introduces another difficulty. His system requires that each item of signed "electronic cash" should be treated as a unit and is incapable of division. Again this means that the system is inappropriate for small value high volume transactions.

The present invention seeks to provide a practical solution to the problem of providing a framework suitable for cashless small value high volume transactions.

According to the invention there is provided a value transfer system having a computer system; a plurality of electronic purses, one or more of the electronic purses being bulk purses; exchange devices whereby purses may communicate with each other to transfer value in transactions which are off-line from the computer system; a value meter system; draw-down means for loading said bulk purse or bulk purses with value under control of the computer system via the value meter system; redemption means for redeeming value from said bulk purse or bulk purses under control of the computer system via the value meter system; the value meter system recording one or more float value records whereby the net value released to the bulk purse or purses may be derived, the net value being the difference between the total of values drawn down to the bulk purse or bulk purses and the total of values redeemed from the bulk purse or bulk purses, the float value record being non-specific with regard to individual transactions.

The value meter system may have an interface whereby the float value record may be adjusted on command so as to create or destroy value within the bulk purse or purses.

Preferably there is provided, in each purse, storage means which stores a purse value record which is accumulative and, in each purse or associated exchange device, a microprocessor, transactions being conducted between purse pairs, one of which, the sending purse, sends value and the other of which, the receiving purse, receives value, the microprocessors being programmed so that in each off-line transaction the purse value record in the sending purse is decreased by a chosen and variable transaction value and the purse value record in the receiving purse is increased by the same transaction value.

By providing a float value record which is non-specific anonymity is ensured and reconciliation with customer accounts for all subsequent purse to purse transactions is unnecessary.

The above combination of features allows transactions to be effected and entirely completed without subsequent recourse or reference to any third party, and in particular without reference to the computer. The advantages in terms of anonymity and computer processing time are clear. A retailer, for example, may make claims to redeem value from time to time, the nature and identity of all the off-line transactions which contribute to the retailer purse value record playing no part in the claim.

Preferably the purses have means whereby a transaction between a pair of purses is given a unique identifier and the microprocessors are programmed to respond to the identifiers to prevent a given transaction being repeated. No reference is then required to the computer to determine whether the same "electronic cash" is being used twice. In claiming to redeem value the computer is accessed and it will be possible to determine whether the same claim is being made twice, either directly or, since a claim may be simply another transaction, by means of a transaction identifier. The transaction identifier is preferably sent from the transmitting purse to the receiving purse, being conveniently derived from data identifying the receiving purse and a receiving purse transaction sequence number or electronic date/time stamp obtained from the receiving purse in a preliminary "hand-shaking" operation. In this way the receiving purse can monitor the transaction and any attempt to transmit the same value record twice will be foiled.

Security of the system demands that cryptographic techniques be employed to prevent fraud. The most effective cryptographic techniques are asymmetrical in that they require different keys to encrypt and decrypt information. One well-known and suitable cryptographic technique is that attributed to Rivest, Shamir and Adleman, known as the RSA system. It is envisaged that both purses of a communicating pair may employ the RSA system equally in a balanced way for algorithmic processing. However, whereas RSA encryption is straight-forward, relatively powerful computing facilities are required to execute RSA decryption conventionally in a short time. In order to overcome this difficulty, in the interests of economy and speed, it is proposed in accordance with a feature of the invention that an unbalanced system be used in which the processing capability required by consumer purses is significantly less than that required by retailer purses.

Each user of an asymmetrical key cryptographic system has a key pair, namely a public key and a secret key. Messages to another are encrypted using the other's (remote) public key which is made available, perhaps by a key exchange procedure. Received messages are decrypted using the local secret key. Use of a public key is far less demanding of computing power than use of a secret key so that conventionally encryption requires less computing overhead than decryption. Therefore, in implementing an unbalanced system of the kind described it is expedient to remove the requirement that the consumer purse performs conventional RSA decryption.

A first way of reducing the cryptographic burden in the consumer purse is to provide it with a simpler, symmetrical, cryptographic system. Such a system uses the same key for encryption and decryption. An example is the DES cryptographic system (Data Encryption Standard - US FIPS 46,1976). Retailer purses retain the full power of the RSA system.

A second method is to use the consumer purse's own public key / secret key system for the interchange of data. In an exchange of keys the consumer purse sends its secret key to the retailer purse. In the transmission of data to the retailer purse the consumer purse would encrypt using its own public key and the retailer purse would decrypt using the consumer purse's secret key.

Security can be enhanced by using electronically certified data, for example digitally signed data, in the transaction process. Each purse on issue will be allocated a characteristic number and will have that number signed by the secret key of an asymmetrical global cryptographic system. The result will be a global signing of the number and this is stored in the purse. All purses will carry the public key of the global pair so that on receipt of another's globally signed number it will be possible to verify that it is valid. The numbers can be regarded as globally certified. Since transactions will require the exchange of encryption keys it is convenient, although not necessary, to arrange that the globally certified numbers are the encryption keys to be exchanged.

The electronic purses may take a number of physical forms. They will include computer processing facilities which may be incorporated in IC or "smart" cards, key fobs, wallets or the like or built into electronic equipment such as point-of-sale equipment or calculators, for example.

Communication with the computer will generally be established by telephone and purses may be incorporated in telephones or modems, since it is possible that desired transactions may be conducted entirely by telephone. However, a more generally convenient arrangement is to have a portable purse such as an IC card which is loaded via modem connection either by a device specific to the individual or by automatic teller machine, for example.

Purses may communicate with each other for the transfer of values by means of communication devices. These may have slots for two purses or may each hold a purse and communicate with each other by infra-red light or electromagnetic radiation, for example.

Reference was made above to the difficulty of providing fast asymmetrical cryptographic facilities in very small and inexpensive devices such as IC cards. Clearly, it is more readily possible to provide such facilities in a communication device or in a modem. Therefore, even though consumer purses may lack full computing power themselves, this may be provided by communication devices which have access to the consumer purse memories and public keys. Thus, while it is readily possible to exchange value records person to person if all purses have full asymmetrical cryptographic facilities this is also possible if the purses are simple and intelligent communication devices are used.

At least the retailers' equipment will generally have the capability to store transaction information. This may be in memory or on disk or on another card or by some other means. Indeed, the equipment may comprise a transfer device for transferring value from the consumer's IC card to a retailer's IC card. The storage capacity of the retailers' equipment need not be large since it is only an accumulated total which needs to be stored. However, it is envisaged that in addition to the transaction values, other information, for example about the identity of the consumer and/or retailer may be exchanged to allow a transaction print-out to be derived locally for analysis purposes. Codes for the goods may be included.

As well as the usual point-of-sale terminals either attended or unattended, the retailers' equipment may include automatic vending machines, travel ticket dispensers, car parking machines, road toll booths, etc. Although security to use a purse may be provided by the requirement to key a PIN code, this is not essential and a preferred arrangement dispenses with this requirement to facilitate use. However, it is envisaged that each purse may have a PIN protected memory and an unprotected memory, the system being such that by use of a terminal or pocket exchange device, value records may be transferred by use of the PIN code from the protected to the unprotected part of the purse.

As mentioned above, individuals may carry their own pocket exchange devices to allow interchanges of transaction values person to person. Refunds may be given or cheques "cashed" by retailers in an equivalent manner.

Value records may be loaded on to the purses in selected currencies for use in appropriate countries.

While it is possible that the system of the present invention could be run by a single financial institution it is envisaged that various financial institutions of a federal, national or international nature would have their own computers with value meters and float value records, the totality of the float value records representing the total value in circulation (in all purses), the funds represented thereby being apportioned between the participating institutions as agreed on the basis of their respective regulated float files.

The invention will further be described with reference to the accompanying drawings, of which:

Figure 1 is a schematic drawing of a banking computer system in accordance with the invention;

Figure 2 is a diagram illustrating the value meter;

Figure 3 is a diagram illustrating an example of a value transaction procedure using a full RSA cryptographic system;

Figure 4 is a diagram illustrating an example of a value transaction procedure using a secret key transmission technique;

Figure 5 is a diagram illustrating an example of a value transaction procedure using a mixed RSA/DES cryptographic system;

Figures 6 and 7 depict one possible embodiment of typical devices of the invention.

Referring to Figure 1 there are shown three clearing banks 1, 2 and 3 with respective computers 1a, 2a and 3a. The computers have files containing account details of the banks' consumer and retailer customers. Each computer also has a value meter 1b, 2b, 3b which shows a float value record. The actual funds represented by the non-specific float value records may reside in one or more of banks 1, 2 or 3, or elsewhere.

Each bank has a bulk purse 1c, 2c, 3c which is connected to the respective value meter and which has a memory with a purse value record. Terminals 5 are connected by telephone selectively to computers 1, 2 and 3. Typically terminals 5 may be home computer terminals or terminals available in public places. Consumers have electronic purses in the form of IC cards 6. These cards have microprocessors and memories. In the memory of each card is stored a purse value record 7. The cards have contacts 8, whereby the cards can interact with terminals 5 via card readers 9. By making appropriate requests at the keyboard of the terminal, a consumer may be connected to the computer of his bank, 1, 2 or 3 and may request a value record to be loaded to his purse. If the bank authorises the request, the bulk purse is instructed to institute a draw-down of value to load purse value record 7 with the value requested. The card is now ready for use.

Further electronic purses are contained in terminals 10, 11 which are equipped with IC card readers 9, located at different points-of-sale. To use his card the consumer presents it to the retailer where it is inserted into reader 9. The required value of the transaction is keyed in and by agreement the total held in the purse value record of the purse 6 is reduced by the amount of the transaction. The purse value record of the purse held within the terminal 10 or 11 is increased by the same transaction value. The consumer takes his goods and is free to use the card up to the total held in the purse value record of his purse in other retailers' equipment.

Periodically a retailer may redeem value represented by the purse value record held in the purse of his terminal 10 or 11, irrespective of the consumers' identities and without presenting any details of the individual transactions that have given rise to the total accumulated value. This may be done by connecting the terminal 10 or 11 to the retailer's bank 1, 2 or 3 as appropriate and requesting a redemption of value. The bank's computer then instructs a redemption transaction which accepts value from the terminal purse. The bank computer credits the retailer's account with funds. The value meters form the basis for allowing control of the total amount of value in circulation in all the purses and for apportioning, on an agreed basis, funds representing the total value.

The bulk purses 1c, 2c, 3c differ from the other purses in being capable of having value loaded and redeemed via the value meter, as well as by purse to purse transactions. In all other respects the purses are technically similar, it being understood in particular that the same cryptographic techniques for bulk purse to other purse transactions (on-line) used are the same as for off-line transactions. Figure 2 shows the value meter as including an indicator 12 which shows a float value record. This is, in this case, the net value released to the bulk purse 1c, being the difference between the total of values drawn down via the meter and the total of values redeemed via the meter. It will be appreciated that the individual gross draw-down and redeemed values may be indicated as well as or instead of the net value, it being readily possible to derive the net value from the gross values, even if not directly indicated. The link 13 between the value meter and that of each of its bulk purses is secure. The purse may be physically adjacent to the value meter and security ensured by physical locks etc. Alternatively, the bulk purse may be remote from the value meter and security is achieved by cryptographic techniques. It is important to ensure that the value meter always accurately represents the value released to the bulk purse and no fraudulent alteration can take place. Each value meter has an interface 14 which may be a link to the bank computing facility or a keyboard unit. Authorised personnel may enter values to be added to or subtracted from the float value record, representing a creation or destruction of value to be circulated. Thus, value to be circulated may be adjusted in bulk, perhaps daily, instead of on demand in response to individual draw-downs and claims.

Using the float value record in this way allows off-line interchange of value, given suitable terminals, between consumers and retailers, retailers and consumers and consumers and consumers, without the need to maintain large numbers of accounts or detailed account to account reconciliations.

Consumers themselves may adjust the purse value records in their purses by person to person interchange or by refunds etc from retailers. It is envisaged that purse value records may be transferred to individual accounts by a claiming procedure from the float value record in a similar manner as retailers' claims.

Purses may be used on an international basis by loading different currencies in them. It is envisaged that each country or group of countries will hold a float value record in the appropriate currency. Application by a consumer to load his purse with a foreign currency may result in his domestic account being debited by the appropriate amount in his own currency and the respective foreign currency float value record being increased.

A purse value record held in a purse may be converted to a different currency on request, the conversion being effected at the appropriate rate and resulting in a transfer of value from the float value record of one currency to that of another currency and a corresponding conversion of funds between the currencies.

Figure 3 shows the procedure during an off-line transaction in a first embodiment of the invention. Both purses have full RSA asymmetrical cryptographic capability. The sending purse has a store SS which holds an accumulative value record Svr and the following RSA keys: sender public and secret keys Pks and Sks and global public key Pkg. In addition there is a certified data message [Pks]∗Skg. This is the sender purse's unique public key signed by the master computer with its global secret key Skg. The public key Pks is thus electronically certified as valid by the system. The receiver purse has a store RS which holds an accumulative value record Rvr and the receiver purse's own RSA public and secret keys Pkr,Skr, the global public key Pkg and a certified public key data message [Pkr]∗Skg.

The first step of the transaction procedure is for the receiving purse to issue a transaction identifier number R. This is derived from a combination of the receiving purse identity and a transaction sequence number for that purse. Two-way communication between the purses is established, perhaps locally by direct connection or by infra-red link or the like or remotely by modem and telephone. The following steps are followed:

1. The receiving purse transmits a request message which is [Pkr]∗Skg+[R]∗Skr.

2. The sending purse is able to check [Pkr]∗Skg by use of the public global key Pkg. This gives the sending purse the authentic key Pkr to verify [R]∗Skr and hence recover R.

3. A value V which is required to be transferred is decremented from the purse value record Svr.

4. The sending purse constructs a transaction value message VR from value V it wishes to transfer and from the request message R. This is signed with the sender's secret key and the following transaction value message is transmitted to the receiving purse:

[Pks] * Skg + [VR] * Sks

5. The receiving purse obtains the public key Pks by use of the public key Pkg thereby verifying the message [Pks]*Skg.

6. Use of the public key Pks thus found verifies [VR]*Sks and hence recovers VR.

7. R is checked to ensure that it carries the identity of the receiving purse and the appropriate transaction number. If not, the transaction is aborted.

8. If all is well, the value V is added to the purse value record of the receiving purse.

9. A signed acknowledgement is sent to the sending purse.

Transaction logs Stl and Rtl are held by the sending and receiving purse stores. The logs may carry such details as are required for analysis of transactions locally, but in the simplest form the logs carry records only of any transaction which has failed for some reason. This can be used for checking in the event of a dispute.

RSA encryption and decryption require calculation of the expression $x^y$ mod n where y is different for encryption and decryption. In particular the index y for encryption (embodied in the public key) is small and the corresponding index for decryption (embodied in the secret key) is very much larger. As a consequence, while modest computing power can handle encryption in an acceptably short time the same is not true for decryption. The creation of a certified (eg digitally signed) message has an equivalent processing overhead to decryption, the checking of such a message has an equivalent processing overhead to encryption. The embodiments illustrated in Figures 4 and 5 provide arrangements which allow one of the pair of communicating purses to be of lower computing power, and therefore less expensive, than the other. In these arrangements some purses of the system (retailer purses) have full RSA capability (encryption and decryption capability) whereas the remainder (consumer purses) include a symmetrical key cryptographic system for transmitting transaction value record messages. A suitable symmetrical key cryptographic system is the DES system. This requires for encryption and decryption a level of computing power similar to the power required for RSA encryption.

Referring to Figure 4 there is illustrated the transaction procedure between two purses where the sending purse is a consumer purse and the receiving purse is a retailer purse. The retailer purse has full RSA capability whereas the consumer purse has a lower power computing facility. The sending purse has a store CS which holds an accumulative value record Cvr and the RSA global public key Pkg. In addition there is a DES key DESc and a certified data message [DESc]*Skg which is the sending purse's unique DES key signed by the master computer with its global secret key Skg. The receiving purse has a store SR which is identical with the store SR of the Figure 3 embodiment, holding Pkr,Skr,Pkg and [Pkr]*Skg.

The first step in the transaction procedure is for the receiving purse to issue a transaction identifier R as in the embodiment of Figure 3. Then the following steps are taken:

1. The receiving purse transmits its certified public key message [Pkr]*Skg.

2. The sending purse checks the signed message and derives Pkr.

3. The sending purse encrypts its certified message using Pkr. Since the index y of a public key such as Pkr is small, encryption with it is computationally easy. The message sent to the receiving purse is

$$E_{Pkr} [[DESc] * Skg]$$

4. The receiving purse decrypts the message firstly with its secret key Skr to derive [DESc]*Skg which itself is checked with Pkg to give verification and derive DESc.

5. The receiving purse transmits the message [R]*DESc which is the transaction identifier R encrypted with a DES integrity algorithm.

6. The receiving purse decrypts the message in DES, derives the transaction identifier R and constructs the transmission value message VR in the same way as in the Figure 3 embodiment.

7. The sending purse decrements the value V from its purse value record and sends the message [VR]*DESc to the receiving purse.

8. The receiving purse decrypts [VR]*DES and checks that R is correct. If not the transaction is aborted.

9. If all is well the value V is added to the receiving purse's purse value record and an acknowledgement message is sent to the sending purse.

Referring now to Figure 5 there is shown a transaction procedure which allows the purses to have unbalanced computing power while using the keys of an asymmetrical cryptographic system. In Figure 5 the store RS of the receiving purse has the same keys as in the Figure 3 embodiment. The computing power of the sending purse is less than that of the receiving purse and instead of the signed public key, the sending purse holds a signed secret key [Sks]*Skg (which also incorporates Pks).

A transaction procedure has the following steps:

1. The receiving purse transmits the signed message [Pkr]*Skg.

2. The sending purse checks the signed message with Pkg, verifying [Pkr]*Skg and hence recovering Pkr.

3. The sending purse encrypts its signed message with Pkr and sends $E_{Pkr}$ [[Sks]*Skg].

4. The receiving purse decrypts the message firstly with the use of its secret key Skr to give [Sks]*Skg and then uses the global public key Pkg to verify [Sks]*Skg, thereby recovering Sks.

5. The receiving purse signs the transaction identifier R with Sks and sends [R]*Sks.

6. The sending purse derives R by the use of Pks.

7. The sending purse decrements its purse value record by the required amount V, and constructs and sends a value message $E_{Pks}$ [VR].

8. The receiving purse decrypts the message with the use of Sks to derive V and R. R is checked and if it is incorrect the transaction is aborted.

9. If all is well the purse value record of the receiving purse is incremented by V, the key Sks in the receiving purse is discarded and an acknowledgement message is sent to the sending purse.

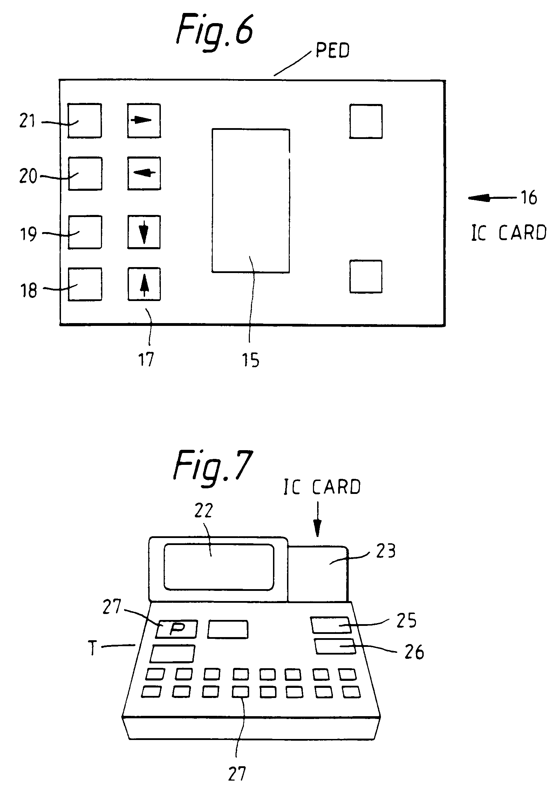

Figure 6 shows one embodiment of the invention in the form the pocket exchange device referred to above. This device PED is battery powered or solar powered and has an LCD screen 15 and IC card reader 16. The consumer's card is inserted in reader 16 and it may then be interrogated by means of keys 17 to 21. Keys 17 allow the user to scroll through log entries and balances resident on the card, accessed via keys 19 and 20. Keys 18 and 21 allow interchange between two cards, via an intermediate store within the device.

Figure 7 depicts a device such as may be found at a retailer's point-of-sale. Similar terminals without retailer functions may be located in financial institutions or in other public places for the use of consumers in accessing their bank account for the purpose of loading and unloading their cards. The device T consists of a point-of-sale terminal, bearing an LCD (or other) display 22, and an IC card reader 23. By means of keyboard 24 the total of a retail transaction may be entered into the terminal. Keys 25 and 26 initiate the transaction with the IC card, inserted in reader 23. After hours, the retailer can prepare the terminal for transmission of value to the bank's host by depressing key 27.

## Claims

1. A value transfer system having a computer system (1a,2a,3a); a plurality of electronic purses (1c,2c,3c,6), one or more of the electronic purses being bulk purses (1c,2c,3c); exchange devices (5,10,11) whereby purses may communicate with each other to transfer value in transactions which are off-line from the computer system; a value meter system (1b,2b,3b); draw-down means for loading said bulk purse or bulk purses with value under control of the computer system via the value meter system; redemption means for redeeming value from said bulk purse or bulk purses under control of the computer system via the value meter system; the value meter system recording one or more float value records whereby the net value released to the bulk purse or purses may be derived, the net value being the difference between the total of values drawn down to the bulk purse or bulk purses and the total of values redeemed from the bulk purse or bulk purses, the float value record being non-specific with regard to individual transactions.

2. A value transfer system as claimed in Claim 1 wherein the value meter system has an interface whereby each float value record may be adjusted on command so as to create or destroy value within the bulk purse or purses.

3. A value transfer system as claimed in either of the preceding claims comprising, in each purse, storage means which stores a purse value record which is accumulative and, in each purse or associated exchange device, a microprocessor, transactions being conducted between purse pairs, one of which, the sending purse, sends value and the other of which, the receiving purse, receives value, the microprocessors being programmed so that in each transaction the purse value record in the sending purse is decreased by a chosen and variable transaction value and the purse value record in the receiving purse is increased by the same transaction value.

4. A value transfer system as claimed in Claim 3 wherein the microprocessors are programmed so that in a transaction between members of a purse pair the transaction is given a transaction identifier specific to at least one of the purses and unique within that purse.

5. A value transfer system as claimed in Claim 4 wherein the microprocessors are programmed such that the transaction identifier is specific to the receiving purse and is unique within the receiving purse by the inclusion of a receiving purse transaction sequence number.

6. A value transfer system as claimed in Claim 5 wherein the microprocessors are programmed such that a transaction includes the steps of sending a request message including the transaction identifier from the receiving purse to the sending purse, incorporating the transaction identifier in a transaction value message sent from the sending purse to the receiving purse and controlling acceptance of the transaction value message in the receiving purse on the basis of the validity of the transaction identifier received.

7. A value transfer system as claimed in any of the preceding claims wherein the microprocessors are programmed to employ an asymmetrical cryptographic system having different public and secret keys and each purse has at least a public key of the system stored.

**8.** A value transfer system as claimed in Claim 7 wherein each purse stores data signed in the cryptographic system by the computer system with a global secret encryption key, the signed data thereby being electronically certified, and the microprocessors are programmed such that each transaction includes the steps of checking certified purse data by means of the global public key.

**9.** A value transfer system as claimed in Claim 7 or Claim 8 wherein each purse stores its own unique public/secret key pair in the cryptographic system and the microprocessors are programmed so that the transmission of transaction data is encrypted and decrypted using these keys.

**10.** A value transfer system as claimed in Claim 9 in which in a transaction the two microprocessors have computing powers which are unequal, the microprocessor associated with the first purse being of superior computing power to that associated with the second purse, and the microprocessors are programmed so that the transaction includes the steps of sending to the first purse the secret key of the second purse key pair and encrypting data at the second purse using the public key of the second purse key pair.

**11.** A value transfer system as claimed in Claim 7 or Claim 8 wherein in a transaction the two microprocessors have computing powers which are unequal, the microprocessor associated with a first purse being of superior computing power to that associated with the second purse, the second purse includes an encryption key for a symmetrical cryptographic system and the microprocessors are programmed so that the transaction includes the steps of sending to the first purse the symmetrical system key of the second purse and encrypting data at the second purse using the symmetrical system key.

**12.** A value transfer system as claimed in any of the preceding claims wherein the computer system comprises a plurality of computers and the value meter system comprises a plurality of value meters each associated with a respective one of said computers.

**Patentansprüche**

**1.** Geldwertüberweisungssystem, das aufweist:
- ein Computersystem (1a, 2a, 3a);
- mehrere elektronische Geldbörsen (1c, 2c, 3c, 6), von denen eine oder mehrere Massenbörsen (1c, 2c, 3c) ist bzw. sind;
- Vermittlungseinrichtungen (5, 10, 11), durch die Börsen in computerunabhängigen Transaktionen miteinander zur Übertragung von Geldwert kommunizieren können;
- ein Geldwertmessersystem (1b, 2b, 3b);
- Abbuchungseinrichtungen zum Auffüllen der Massenbörse oder der Massenbörsen mit Geldwert gesteuert vom Computersystem über das Geldwertmessersystem;
- Tilgungseinrichtungen zur Zurückzahlung von Geldwert an die Massenbörse oder die Massenbörsen gesteuert vom Computersystem über das Geldwertmessersystem, welches eines oder mehrere Fließgeldwertkassenstände aufzeichnet, von denen der für die Massenbörse oder die Börsen freigegebene Nettowert abgeleitet werden kann, der die Differenz zwischen der Gesamtsumme der an die Massenbörse oder Massenbörsen angewiesenen Geldwerte und der Gesamtsumme der von der Massenbörse oder den Massenbörsen abgebuchten Geldwerte ist, und wobei der Fließgeldwertkassenstand hinsichtlich individueller Transaktionen unspezifisch ist.

**2.** Geldwertüberweisungssystem nach Anspruch 1, bei dem das Geldwertmessersystem eine Schnittstelle hat, durch die jeder Fließgeldwertkassenstand auf einen Befehl hin so justiert werden kann, daß Geldwert in der Massenbörse oder den Börsen erzeugbar oder zerstörbar ist.

**3.** Geldwertüberweisungssystem nach irgendeinem der vorangehenden Ansprüche, das in jeder Geldbörse Speichermittel enthält, die einen Kassenstand der Börse, der akkumulativ ist, speichert und in jeder Geldbörse oder zugehöriger Vermittlungseinrichtung einen Mikroprozessor aufweist, und Transaktionen werden zwischen zwei Geldbörsen durchgeführt, von denen die eine, die sendende Geldbörse, Geldwert sendet und die andere, die empfangende Geldbörse, Geldwert empfängt, und die Mikroprozessoren sind so programmiert, daß bei jeder Transaktion der Börsenkassenstand in der sendenden Geldbörse um einen gewählten und variablen Transaktionswert verringert und der Börsenkassenstand in der empfangenden Geldbörse um denselben Transaktionswert erhöht wird.

4. Geldwertüberweisungssystem nach Anspruch 3, bei dem die Mikroprozessoren so programmiert sind, daß bei einer Transaktion zwischen zwei Geldbörsen der Transaktion ein wenigstens für eine der Geldbörsen spezifischer Transaktionsidentifizierer zugeteilt wird, der innerhalb dieser Geldbörse einzigartig ist.

5. Geldwertüberweisungssystem nach Anspruch 4, bei dem die Mikroprozessoren so programmiert sind, daß der Transaktionsidentifizierer für die empfangende Geldbörse spezifisch ist und innerhalb der empfangenden Geldbörse durch Einfluß einer Empfängerbörsentransaktionsfolgenummer einzigartig ist.

6. Geldwertüberweisungssystem nach Anspruch 5, bei dem die Mikroprozessoren so programmiert sind, daß eine Transaktion folgende Schritte enthält:
   - Senden einer Anforderungsnachricht, die den Transaktionsidentifizierer enthält von der Empfangsbörse zur sendenden Börse,
   - Einbeziehen des Transaktionsidentifizierers in eine von der sendenden Börse zur empfangenden Börse gesendeten Transaktionswertnachricht, und
   - Kontrollieren der Annahme der Transaktionswertnachricht in der empfangenden Geldbörse auf der Basis der Gültigkeit des empfangenden Transaktionsidentifiziers.

7. Geldwertüberweisungssystem nach einem der vorangehenden Ansprüche, bei dem die Mikroprozessoren so programmiert sind, daß sie ein asymmetrisches Verschlüsselungssystem anwenden, das verschiedene öffentliche und geheime Schlüssel und bei dem jede Geldbörse wenigstens einen öffentlichen Schlüssel des gespeicherten Systems hat.

8. Geldwertüberweisungssystem nach Anspruch 7, bei dem jede Börse Daten speichert, die im Verschlüsselungssystem durch das Computersystem mit einem globalen, geheimen Verschlüsselungsschlüssel gezeichnet sind, wobei die gezeichneten Daten dadurch elektronisch gesichert sind, und die Mikroprozessoren so programmiert sind, daß jede Transaktion die Schritte des Überprüfens gesicherter Geldbörsendaten mittels des globalen öffentlichen Schlüssels einschließt.

9. Geldwertüberweisungssystem nach Anspruch 7 oder 8, bei dem jede Geldbörse ihr eigenes und einzigartiges öffentliches/geheimes Schlüsselpaar im Verschlüsselungssystem speichert und die Mikroprozessoren so programmiert sind, daß die Übertragung von Transaktionsdaten unter Verwendung dieser Schlüssel verschlüsselt und entschlüsselt wird.

10. Geldwertüberweisungssystem nach Anspruch 9, bei dem in einer Transaktion die beiden Mikroprozessoren ungleiche Rechenleistungen haben, wobei der der ersten Börse zugehörige Mikroprozessor eine höhere Rechenleistung als der der zweiten Geldbörse zugehörige Mikroprozessor hat, und die Mikroprozessoren so programmiert sind, daß die Transaktion die Schritte enthält: Senden des geheimen Schlüssels des Schlüsselpaars der zweiten Geldbörse an die erste Geldbörse und Verschlüsseln von Daten an der zweiten Geldbörse unter Verwendung des öffentlichen Schlüssels des Schlüsselpaars der zweiten Geldbörse.

11. Geldwertüberweisungssystem nach Anspruch 7 oder 8, bei dem in einer Transaktion die beiden Mikroprozessoren ungleiche Rechenleistung haben, der zur ersten Geldbörse gehörende Mikroprozessor eine höhere Rechenleistung als der zur zweiten Geldbörse gehörende Mikroprozessor hat, die zweite Geldbörse einen Verschlüsselungsschlüssel für ein symmetrisches Verschlüsselungssystem enthält und die Mikroprozessoren so programmiert sind, daß die Transaktion die Schritte enthält: Senden des Schlüssel des symmetrischen Verschlüsselungssystems der zweiten Geldbörse an die erste Geldbörse und Verschlüsselung von Daten an der zweiten Geldbörse unter Verwendung des Schlüssels des symmetrischen Verschlüsselungssystems.

12. Geldwertüberweisungssystem nach irgendeinem der vorangehenden Ansprüche, bei dem das Computersystem eine Vielzahl von Computern und das Geldwertmessersystem eine Vielzahl von Geldwertmessern aufweist, die jeweils einem der Computer zugeordnet sind.

## Revendications

1. Système de transfert de valeurs ayant un système d'ordinateur (1a,2a,3a); une pluralité de porte-monnaie électroniques (1c,2c,3c,6), un ou plusieurs des porte-monnaie électroniques étant des porte-monnaie à forfait; des dispositifs d'échange (5,10,11) au moyen desquels des porte-monnaie peuvent communiquer les uns avec les autres pour transférer des valeurs au cours de transactions qui s'effectuent indépendamment du système d'ordinateur; un système de comptage de valeurs (1b,2b,3b); des moyens de crédit pour charger des valeurs dans le porte-monnaie à forfait ou les porte-monnaie à forfait sous le contrôle du système d'ordinateur par l'intermédiaire du système de comptage de valeurs; des moyens de débit pour débiter des valeurs du porte-monnaie à forfait ou des porte-monnaie à forfait sous le contrôle du système d'ordinateur par l'intermédiaire du système de comptage de valeurs; le système de comptage de valeurs enregistrant un ou plusieurs enregistrements de valeur flottante, ce qui permet de déterminer la valeur nette fournie au porte-monnaie à forfait ou aux porte-monnaie à forfait, la valeur nette étant la différence entre le total des valeurs créditées au porte-monnaie à forfait ou aux porte-monnaie à forfait et le total des valeurs débitées du porte-monnaie à forfait ou des porte-monnaie à forfait, l'enregistrement de valeur flottante n'étant pas spécifique aux transactions individuelles.

2. Système de transfert de valeurs selon la revendication 1, dans lequel le système de comptage de valeurs a une interface au moyen de laquelle chaque enregistrement de valeur flottante peut être ajusté sur ordre de façon à créer ou à détruire une valeur contenue dans le porte-monnaie à forfait ou les porte-monnaie à forfait.

3. Système de transfert de valeurs selon l'une quelconque des revendications précédentes comprenant, dans chaque porte-monnaie, un moyen de stockage qui stocke un enregistrement de valeur de porte-monnaie qui est cumulatif et, dans chaque porte-monnaie ou dispositif d'échange associé, un microprocesseur, des transactions étant effectuées entre des paires de porte-monnaie dont l'un, le porte-monnaie émetteur, envoie une valeur et dont l'autre, le porte-monnaie récepteur, reçoit la valeur, les microprocesseurs étant programmés pour qu'au cours de chaque transaction, l'enregistrement de valeur de porte-monnaie stocké dans le porte-monnaie émetteur, soit réduit d'une valeur de transaction choisie et variable et pour que l'enregistrement de valeur de porte-monnaie stocké dans le porte-monnaie récepteur, soit augmenté de la même valeur de transaction.

4. Système de transfert de valeurs selon la revendication 3, dans lequel les microprocesseurs sont programmés pour qu'au cours d'une transaction entre les membres d'une paire de porte-monnaie, un identificateur de transaction spécifique à au moins l'un des porte-monnaie et unique dans ce porte-monnaie soit attribué à la transaction.

5. Système de transfert de valeurs selon la revendication 4, dans lequel les microprocesseurs sont programmés pour que l'identificateur de transaction soit spécifique au porte-monnaie récepteur et soit unique dans le porte-monnaie récepteur par inclusion d'un numéro de séquence de transaction de porte-monnaie récepteur.

6. Système de transfert de valeurs selon la revendication 5, dans lequel les microprocesseurs sont programmés pour qu'une transaction comporte les étapes consistant à envoyer du porte-monnaie récepteur au porte-monnaie émetteur un message de requête incluant l'identificateur de transaction, à incorporer l'identificateur de transaction dans un message de valeur de transaction envoyé par le porte-monnaie émetteur au porte-monnaie récepteur et à commander l'acceptation du message de valeur de transaction dans le porte-monnaie récepteur en fonction de la validité de l'identificateur de transaction reçu.

7. Système de transfert de valeurs selon l'une quelconque des revendications précédentes, dans lequel les microprocesseurs sont programmés pour utiliser un système cryptographique asymétrique ayant différentes clés publiques et secrètes et dans lequel chaque porte-monnaie mémorise au moins une clé publique du système.

8. Système de transfert de valeurs selon la revendication 7, dans lequel chaque porte-monnaie stocke des données signées dans le système cryptographique par le système d'ordinateur avec une clé d'encryptage secrète globale, la donnée signée étant ainsi certifiée électroniquement, et dans lequel les microprocesseurs sont programmés pour que chaque transaction comporte les étapes consistant à vérifier des données de porte-monnaie certifiées au moyen de la clé publique globale.

9. Système de transfert de valeurs selon la revendication 7 ou la revendication 8, dans lequel chaque porte-monnaie stocke sa propre paire unique de clés publique/secrète dans le système cryptographique et dans lequel les microprocesseurs sont programmés pour que la transmission des données de transaction soit encryptée et décryptée par utilisation de ces clés.

10. Système de transfert de valeurs selon la revendication 9, dans lequel, au cours d'une transaction, les deux microprocesseurs ont des puissances de calcul inégales, le microprocesseur associé à un premier porte-monnaie ayant une puissance de calcul supérieure à celui qui est associé au second porte-monnaie, et dans lequel les microprocesseurs sont programmés pour que la transaction comporte les étapes consistant à envoyer au premier porte-monnaie la clé secrète de la paire de clés du second porte-monnaie et à encrypter des données dans le second porte-monnaie en utilisant la clé publique de la paire de clés du second porte-monnaie.

**11.** Système de transfert de valeurs selon la revendication 7 ou la revendication 8, dans lequel, au cours d'une transaction, les deux microprocesseurs ont des puissances de calcul inégales, le microprocesseur associé à un premier porte-monnaie ayant une puissance de calcul supérieure à celui qui est associé au second porte-monnaie, dans lequel le second porte-monnaie comporte une clé d'encryptage pour un système cryptographique symétrique et dans lequel les microprocesseurs sont programmés pour que la transaction comporte les étapes consistant à envoyer au premier porte-monnaie la clé du système symétrique du second porte-monnaie et à encrypter des données dans le second porte-monnaie en utilisant la clé du système symétrique.

**12.** Système de transfert de valeurs selon l'une quelconque des revendications précédentes, dans lequel le système d'ordinateur comprend une pluralité d'ordinateurs, et le système de comptage de valeurs comprend une pluralité de compteurs de valeurs chacun associé à l'un respectif de ces ordinateurs.

Fig.1

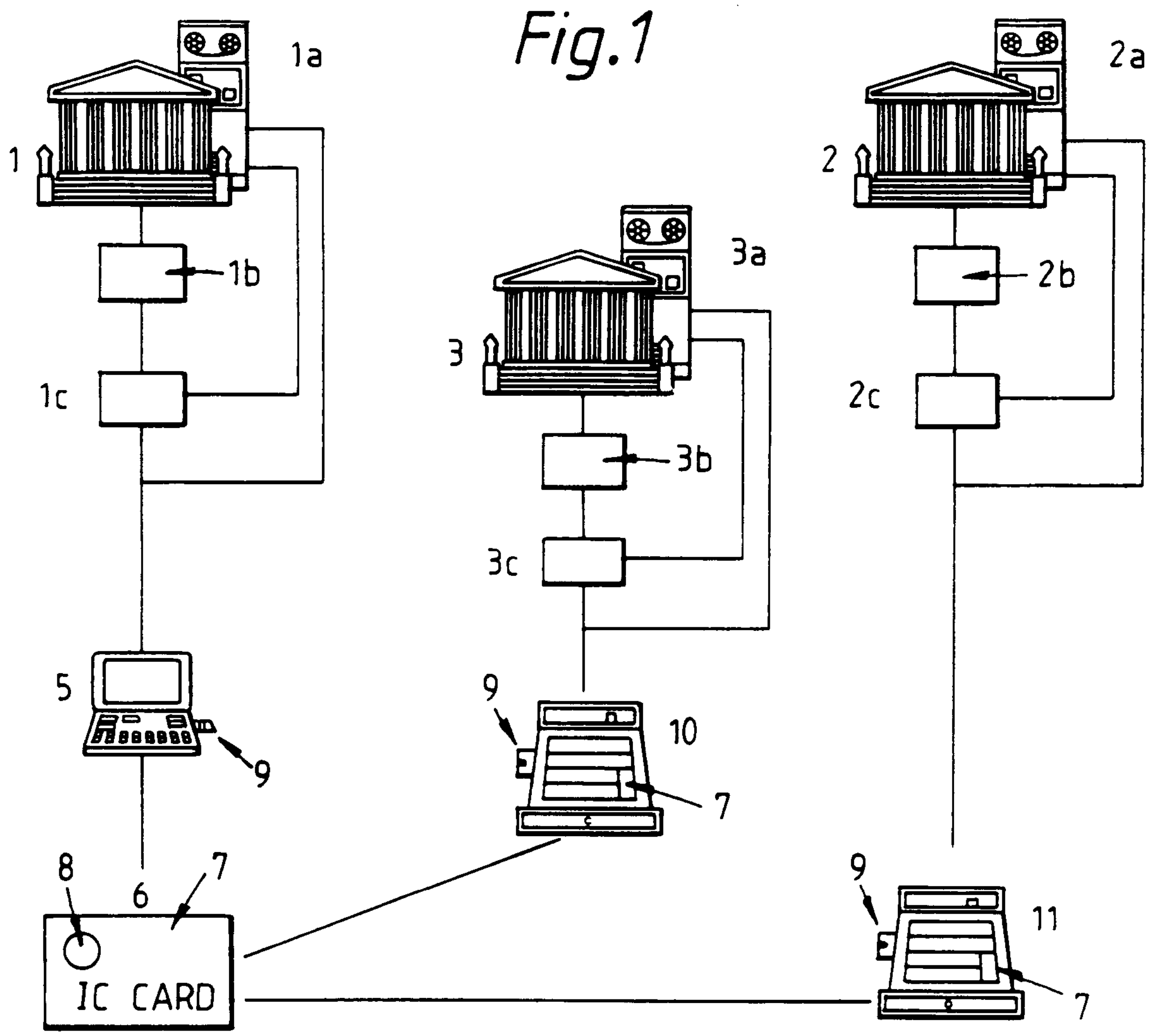


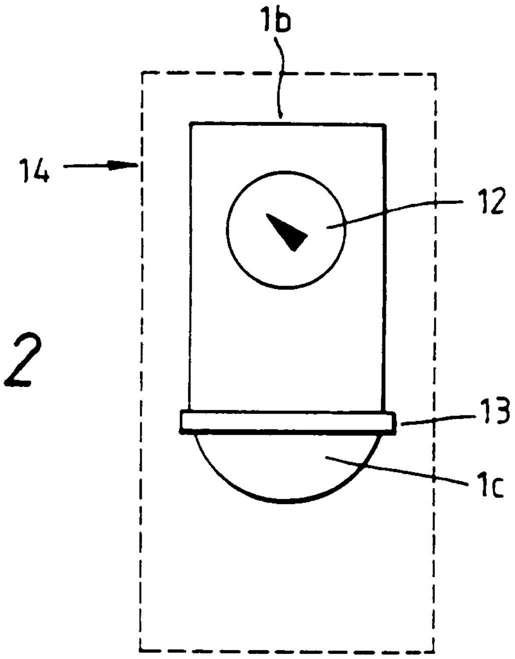


Fig.2

Fig.3

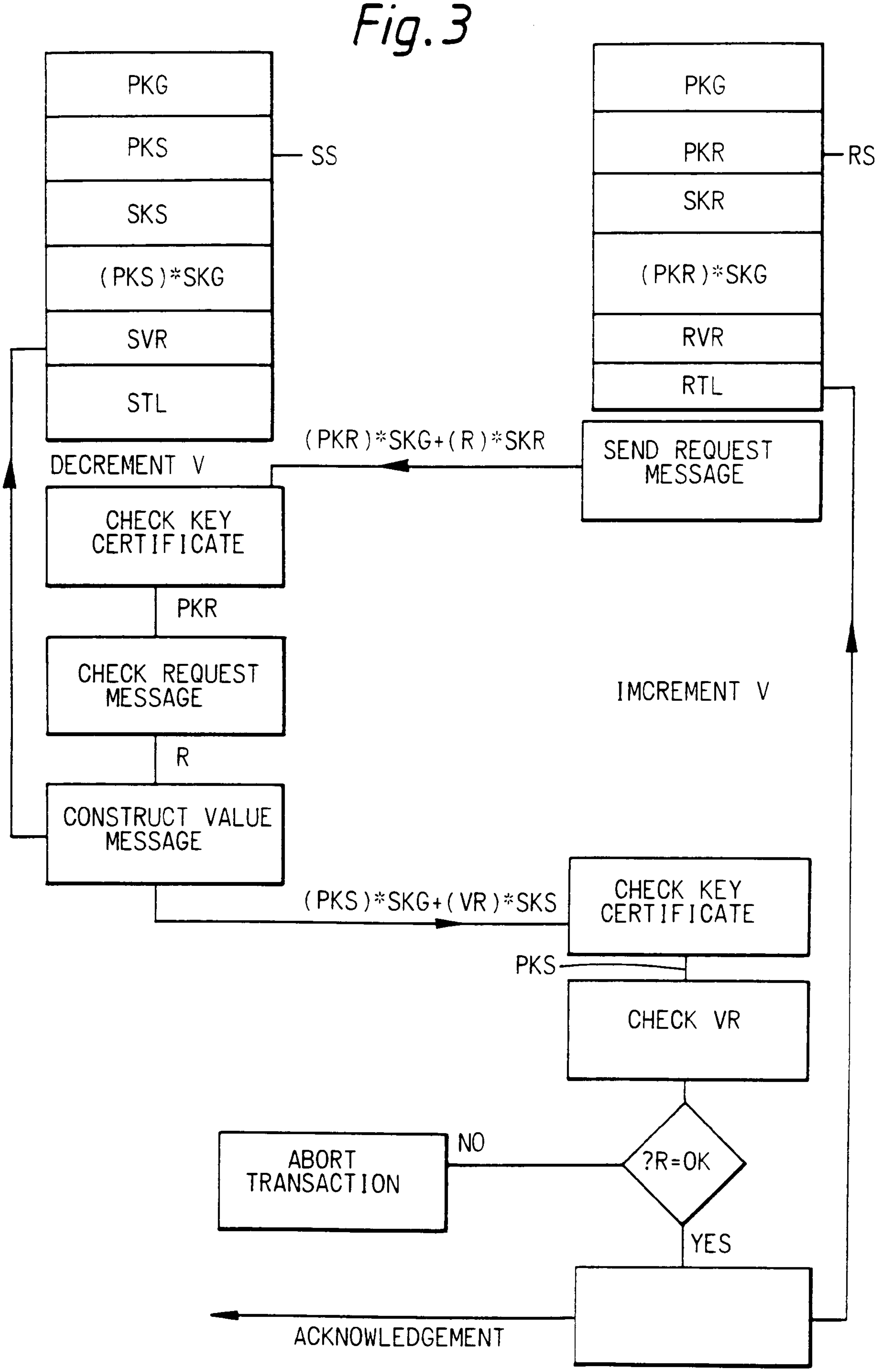
PKG
PKS
SKS
(PKS)*SKG
SVR
STL
SS
PKG
PKR
SKR
(PKR)*SKG
RVR
RTL
RS
(PKR)*SKG+(R)*SKR
DECREMENT V
SEND REQUEST MESSAGE
CHECK KEY CERTIFICATE
PKR
CHECK REQUEST MESSAGE
IMCREMENT V
R
CONSTRUCT VALUE MESSAGE
(PKS)*SKG+(VR)*SKS
CHECK KEY CERTIFICATE
PKS
CHECK VR
NO
ABORT TRANSACTION
?R=OK
YES
ACKNOWLEDGEMENT

Fig. 4

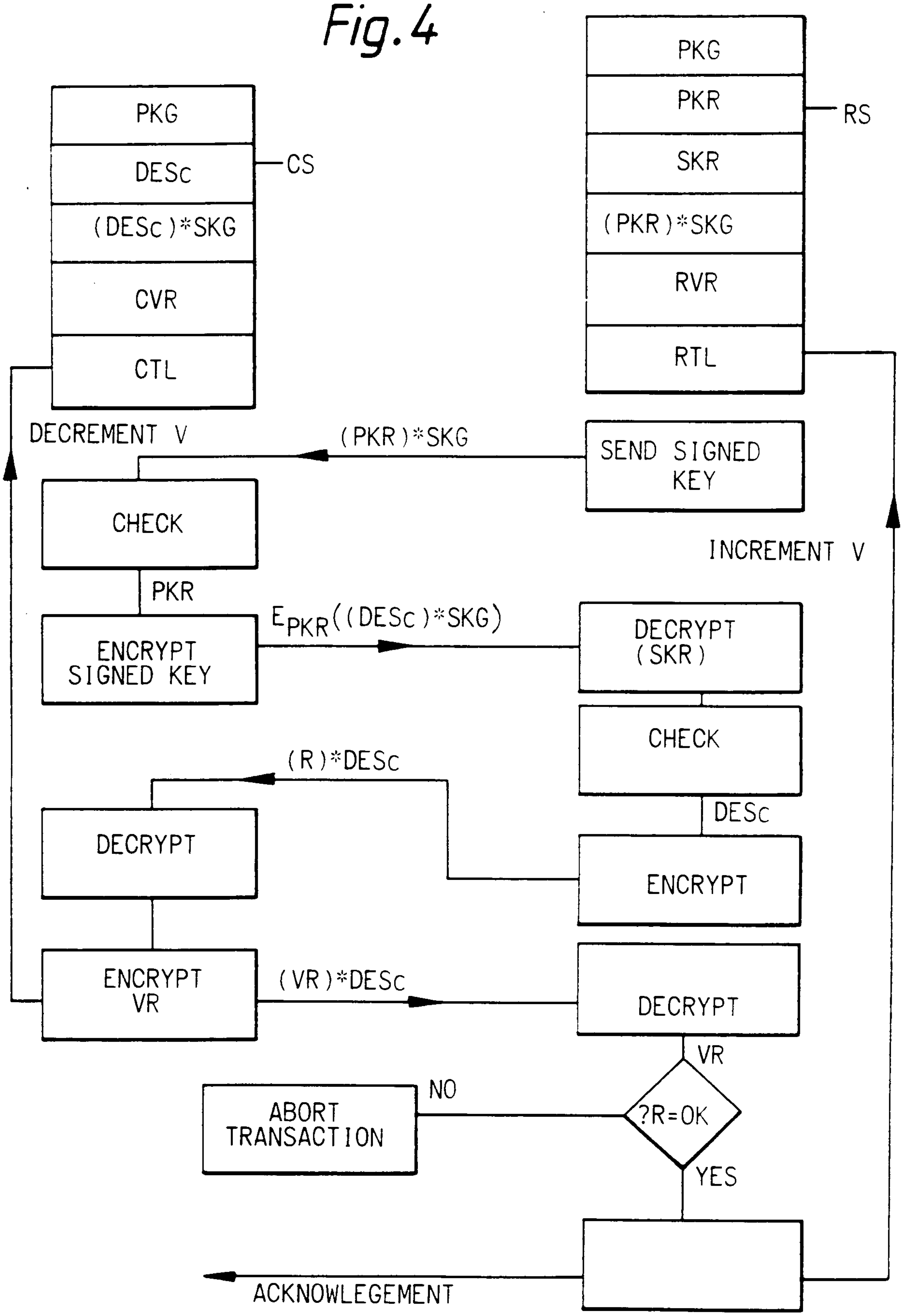
PKG
DESc
(DESc)*SKG
CVR
CTL
CS
PKG
PKR
SKR
(PKR)*SKG
RVR
RTL
RS
DECREMENT V
(PKR)*SKG
SEND SIGNED KEY
CHECK
INCREMENT V
PKR
$E_{PKR}$((DESc)*SKG)
ENCRYPT SIGNED KEY
DECRYPT (SKR)
CHECK
(R)*DESc
DESc
DECRYPT
ENCRYPT
ENCRYPT VR
(VR)*DESc
DECRYPT
VR
NO
ABORT TRANSACTION
?R=OK
YES
ACKNOWLEGEMENT

Fig. 5

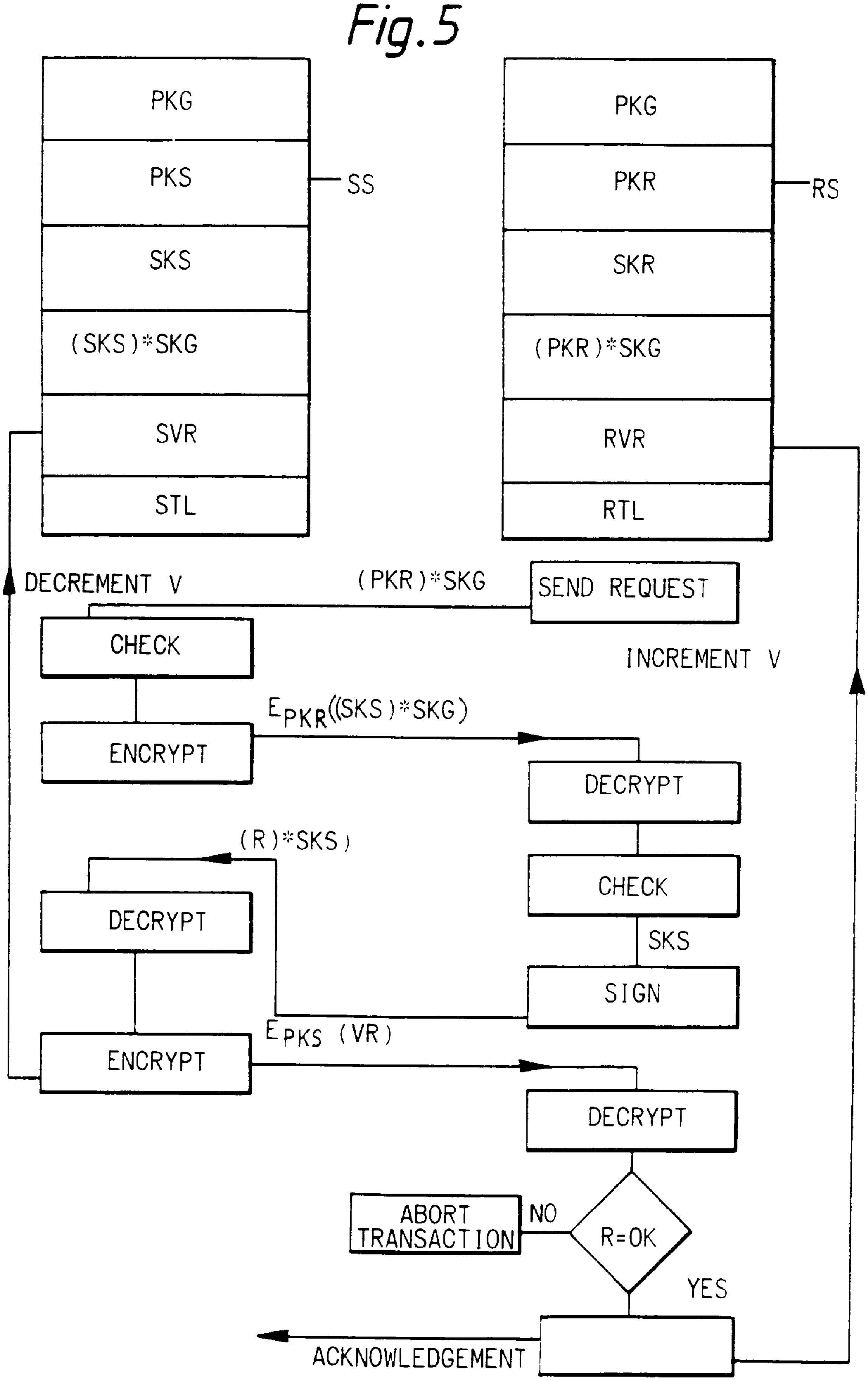
PKG
PKS
SS
SKS
(SKS)*SKG
SVR
STL
PKG
PKR
RS
SKR
(PKR)*SKG
RVR
RTL
DECREMENT V
(PKR)*SKG
SEND REQUEST
CHECK
INCREMENT V
$E_{PKR}$((SKS)*SKG)
ENCRYPT
DECRYPT
(R)*SKS)
CHECK
DECRYPT
SKS
SIGN
$E_{PKS}$ (VR)
ENCRYPT
DECRYPT
ABORT TRANSACTION
NO
R=OK
YES
ACKNOWLEDGEMENT

Fig.6

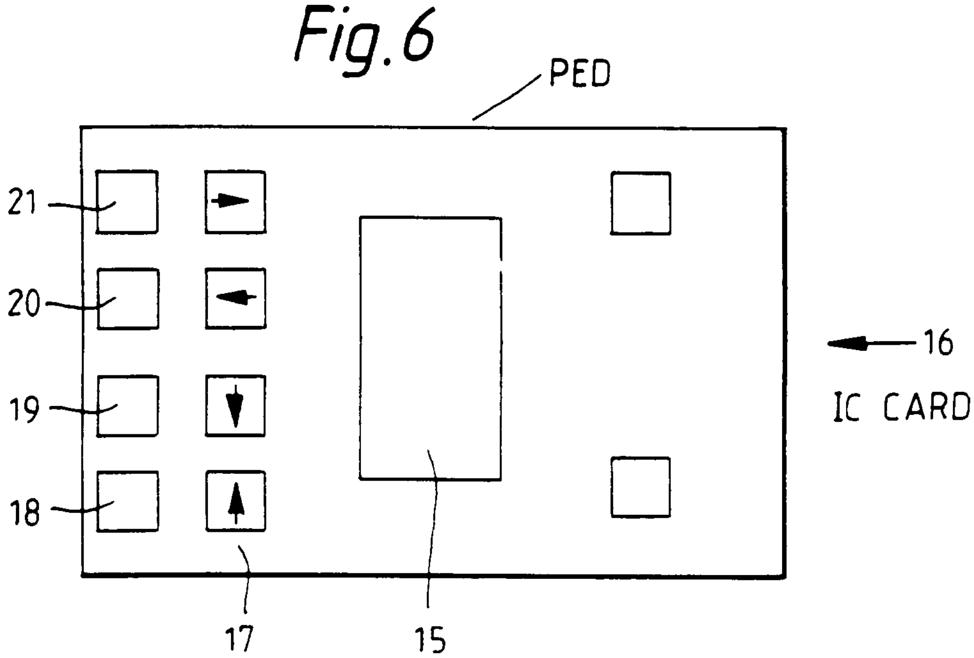


Fig.7